# EUROPEAN PATENT APPLICATION

(11) **EP 3 860 128 A1**
(43) Date of publication of application: **04.08.2021**
(21) Application number: 19874538.2
(22) Date of filing: 09.10.2019
(51) Int. Cl.: H04N 19/61, H04N 19/176, H04N 19/119

(54) **IMAGE BLOCK DIVISION METHOD AND DEVICE**

(30) Priority: 15.10.2018 CN 201811198624
(71) Applicant: HUAWEI TECHNOLOGIES CO., LTD., Shenzhen, Guangdong 518129 (CN); Tsinghua University, Beijing 100084 (CN)
(72) Inventor: YU, Quanhe, Shenzhen, Guangdong 518129 (CN); ZHENG, Jianhua, Shenzhen, Guangdong 518129 (CN); WANG, Liqiang, Beijing 100084 (CN); HE, Yun, Beijing 100084 (CN)
(74) Representative: Thun, Clemens
(86) International application number: PCT/CN2019/110059
(87) International publication number: WO 2020/078230

(57) **Abstract**

This application provides a picture block splitting method and an apparatus. The picture block splitting method in this application includes: obtaining a picture block in a to-be-processed picture, where the picture block is an object on which encoding is performed; determining, based on a length of a first side and a length of a second side of the picture block, a block splitting method used for the picture block, where the first side and the second side are two neighboring sides of the picture block, the first side is a horizontal line, and the second side is a vertical line; and splitting the picture block according to the block splitting method. In this application, an unnecessary block splitting method is omitted, operation overheads are reduced, and picture encoding efficiency is improved.

## Description

This application claims priority to Chinese Patent Application No. 201811198624.3, filed on October 15, 2018 and entitled "PICTURE BLOCK SPLITTING METHOD AND APPARATUS", which is incorporated herein by reference in its entirety.

### TECHNICAL FIELD

This application relates to picture processing technologies, and in particular, to a picture block splitting method and an apparatus.

### BACKGROUND

A modern video coding standard adopts a picture block-based hybrid video encoding and decoding solution. An encoding process includes: performing (intra and inter) prediction, transform, quantization, and entropy encoding on each picture block in a picture frame. A decoding process includes: performing entropy decoding, dequantization, inverse transform, and (intra and inter) prediction on a picture block in a picture frame. A derivative mode is a new block splitting method. A plurality of block splitting methods may be derived for one picture block, and a picture subblock is actually a result obtained by splitting a picture block.

However, a plurality of picture subblocks may be derived according to the block splitting method in the derivative mode. Consequently, if block encoding is performed based on all the picture subblocks, problems such as low efficiency and high overheads inevitably occur.

### SUMMARY

This application provides a picture block splitting method and an apparatus, so that an unnecessary block splitting method is omitted. This reduces operation overheads, and improves picture encoding efficiency.

According to a first aspect, this application provides a picture block splitting method. For each of different picture blocks in a to-be-processed picture, a block splitting method used for the picture block may be determined based on a length of a first side and a length of a second side of the picture block. The first side and the second side are two neighboring sides of the picture block. The first side is a horizontal line, and the second side is a vertical line. In this way, the determined block splitting method is most suitable for a shape of the picture block, and an unnecessary block splitting method is omitted. This reduces operation overheads, and improves picture encoding efficiency.

A derivative mode is a new block splitting method. A plurality of block splitting methods may be derived for one picture block, and a picture subblock is actually a result obtained by splitting a picture block. The picture block in the picture is an object on which encoding is performed, and the picture block may be split by using a plurality of block splitting methods. A first splitting method is to split the picture block by using horizontal and vertical lines. In this splitting method, a plurality of splitting effects may be derived based on different combinations of four horizontal and vertical lines. A second splitting method is to split the picture block by using a horizontal line. In this splitting method, a plurality of splitting effects may be derived based on different combinations of a plurality of horizontal lines. A third splitting method is to split the picture block by using a vertical line. In this splitting method, a plurality of splitting effects may be derived based on different combinations of a plurality of vertical lines.

In a possible implementation, an encoding apparatus may determine the block splitting method from a plurality of available block splitting methods based on the length of the first side, the length of the second side, and a specified threshold.

In a possible implementation, the encoding apparatus calculates a first ratio and a second ratio, where the first ratio is a ratio of the length of the first side to the length of the second side, and the second ratio is a ratio of the length of the second side to the length of the first side; and if the first ratio is greater than or equal to the threshold, determines that the block splitting method used for the picture block is the third splitting method; or if the second ratio is greater than or equal to the threshold, determines that the block splitting method used for the picture block is the second splitting method; or if both the first ratio and the second ratio are less than the threshold, determines that the block splitting method used for the picture block is any one of the first splitting method, the second splitting method, and the third splitting method.

In a possible implementation, the threshold includes a first threshold and a second threshold; and the encoding apparatus calculates a first ratio and a second ratio, where the first ratio is a ratio of the length of the first side to the length of the second side, and the second ratio is a ratio of the length of the second side to the length of the first side; and if the first ratio is greater than or equal to the first threshold and the length of the second side is less than the second threshold, determines that the block splitting method used for the picture block is the third splitting method; or if the second ratio is greater than or equal to the first threshold and the length of the first side is less than the second threshold, determines that the block splitting method used for the picture block is the second splitting method; or if the first ratio is greater than or equal to the first threshold and the length of the second side is greater than the second threshold, the second ratio is greater than or equal to the first threshold and the length of the first side is greater than the second threshold, or both the first ratio and the second ratio are less than the first threshold, determines that the block splitting method used for the picture block is any one of the first splitting method, the second splitting method, and the third splitting method.

In a possible implementation, the encoding apparatus may calculate a first ratio when the length of the first side is greater than the length of the second side, where the first ratio is a ratio of the length of the first side to the length of the second side, and if the first ratio is greater than or equal to the threshold, determine that the block splitting method is the third splitting method; or calculate a second ratio when the length of the second side is greater than the length of the first side, where the second ratio is a ratio of the length of the second side to the length of the first side, and if the second ratio is greater than or equal to the threshold, determine that the block splitting method is the second splitting method; or if both the first ratio and the second ratio are less than the threshold, determine that the block splitting method is any one of the first splitting method, the second splitting method, and the third splitting method.

In a possible implementation, the threshold includes a third threshold and a fourth threshold; and the encoding apparatus calculates a first ratio, where the first ratio is a ratio of the length of the first side to the length of the second side; and if the length of the first side is greater than the length of the second side and the first ratio is greater than or equal to the third threshold, determines that the block splitting method is the third splitting method; or if the length of the second side is greater than the length of the first side and the first ratio is less than or equal to the fourth threshold, determines that the block splitting method is the second splitting method; or if the length of the first side is greater than the length of the second side and the first ratio is less than the third threshold, or the length of the second side is greater than the length of the first side and the first ratio is greater than the fourth threshold, determines that the block splitting method is any one of the first splitting method, the second splitting method, and the third splitting method.

In this application, the block splitting method that is suitable for the shape of the picture block in the to-be-processed picture is determined, so that an unnecessary block splitting method is omitted. This reduces operation overheads, and improves picture encoding efficiency.

According to a second aspect, this application provides a picture block splitting method. Side length information of a picture block is obtained from an obtained bitstream of a to-be-processed picture, where the picture block is an object on which encoding is performed, the side length information includes a length of a first side and a length of a second side of the picture block, the first side and the second side are two neighboring sides of the picture block, the first side is a horizontal line, and the second side is a vertical line; a block splitting method used for the picture block is determined based on the length of the first side and the length of the second side of the picture block; and the picture block is split according to the block splitting method.

In a possible implementation, a decoding apparatus may determine the block splitting method from a plurality of available block splitting methods based on the length of the first side, the length of the second side, and a specified threshold.

The available block splitting methods include a first splitting method, a second splitting method, and a third splitting method; and when the block splitting method is the first splitting method, the picture block is split by using horizontal and vertical lines; or when the block splitting method is the second splitting method, the picture block is split by using a horizontal line; or when the block splitting method is the third splitting method, the picture block is split by using a vertical line.

In a possible implementation, the decoding apparatus calculates a first ratio and a second ratio, where the first ratio is a ratio of the length of the first side to the length of the second side, and the second ratio is a ratio of the length of the second side to the length of the first side; and if the first ratio is greater than or equal to the threshold, determines that the block splitting method used for the picture block is the third splitting method; or if the second ratio is greater than or equal to the threshold, determines that the block splitting method used for the picture block is the second splitting method; or if both the first ratio and the second ratio are less than the threshold, determines that the block splitting method used for the picture block is any one of the first splitting method, the second splitting method, and the third splitting method.

In a possible implementation, the threshold includes a first threshold and a second threshold; and the decoding apparatus calculates a first ratio and a second ratio, where the first ratio is a ratio of the length of the first side to the length of the second side, and the second ratio is a ratio of the length of the second side to the length of the first side; and if the first ratio is greater than or equal to the first threshold and the length of the second side is less than the second threshold, determines that the block splitting method used for the picture block is the third splitting method; or if the second ratio is greater than or equal to the first threshold and the length of the first side is less than the second threshold, determines that the block splitting method used for the picture block is the second splitting method; or if the first ratio is greater than or equal to the first threshold and the length of the second side is greater than the second threshold, the second ratio is greater than or equal to the first threshold and the length of the first side is greater than the second threshold, or both the first ratio and the second ratio are less than the first threshold, determines that the block splitting method used for the picture block is any one of the first splitting method, the second splitting method, and the third splitting method.

In a possible implementation, the decoding apparatus may calculate a first ratio when the length of the first side is greater than the length of the second side, where the first ratio is a ratio of the length of the first side to the length of the second side, and if the first ratio is greater than or equal to a threshold, determine that the block splitting method is the third splitting method; or calculate a second ratio when the length of the second side is greater than the length of the first side, where the second ratio is a ratio of the length of the second side to the length of the first side, and if the second ratio is greater than or equal to the threshold, determine that the block splitting method is the second splitting method; or if both the first ratio and the second ratio are less than the threshold, determine that the block splitting method is any one of the first splitting method, the second splitting method, and the third splitting method.

In a possible implementation, the threshold includes a third threshold and a fourth threshold; and the decoding apparatus calculates a first ratio, where the first ratio is a ratio of the length of the first side to the length of the second side; and if the length of the first side is greater than the length of the second side and the first ratio is greater than or equal to the third threshold, determines that the block splitting method is the third splitting method; or if the length of the second side is greater than the length of the first side and the first ratio is less than or equal to the fourth threshold, determines that the block splitting method is the second splitting method; or if the length of the first side is greater than the length of the second side and the first ratio is less than the third threshold, or the length of the second side is greater than the length of the first side and the first ratio is greater than the fourth threshold, determines that the block splitting method is any one of the first splitting method, the second splitting method, and the third splitting method.

In this application, the block splitting method that is suitable for a shape of the picture block in the to-be-processed picture is determined, so that an unnecessary block splitting method is omitted. This reduces operation overheads, and improves picture decoding efficiency.

According to a third aspect, this application provides an encoding apparatus, including:
a first obtaining module, configured to obtain a picture block in a to-be-processed picture, where the picture block is an object on which encoding is performed;
a first determining module, configured to determine, based on a length of a first side and a length of a second side of the picture block, a block splitting method used for the picture block, where the first side and the second side are two neighboring sides of the picture block, the first side is a horizontal line, and the second side is a vertical line; and
a first splitting module, configured to split the picture block according to the block splitting method.

In a possible implementation, the first determining module is specifically configured to determine the block splitting method from a plurality of available block splitting methods based on the length of the first side, the length of the second side, and a specified threshold.

In a possible implementation, the available block splitting methods include a first splitting method, a second splitting method, and a third splitting method; and the first splitting module is specifically configured to: when the block splitting method is the first splitting method, split the picture block by using horizontal and vertical lines; or when the block splitting method is the second splitting method, split the picture block by using a horizontal line; or when the block splitting method is the third splitting method, split the picture block by using a vertical line.

In a possible implementation, the first determining module is specifically configured to: calculate a first ratio and a second ratio, where the first ratio is a ratio of the length of the first side to the length of the second side, and the second ratio is a ratio of the length of the second side to the length of the first side; and if the first ratio is greater than or equal to the threshold, determine that the block splitting method used for the picture block is the third splitting method; or if the second ratio is greater than or equal to the threshold, determine that the block splitting method used for the picture block is the second splitting method; or if both the first ratio and the second ratio are less than the threshold, determine that the block splitting method used for the picture block is any one of the first splitting method, the second splitting method, and the third splitting method.

In a possible implementation, the threshold includes a first threshold and a second threshold; and the first determining module is specifically configured to: calculate a first ratio and a second ratio, where the first ratio is a ratio of the length of the first side to the length of the second side, and the second ratio is a ratio of the length of the second side to the length of the first side; and if the first ratio is greater than or equal to the first threshold and the length of the second side is less than the second threshold, determine that the block splitting method used for the picture block is the third splitting method; or if the second ratio is greater than or equal to the first threshold and the length of the first side is less than the second threshold, determine that the block splitting method used for the picture block is the second splitting method; or if the first ratio is greater than or equal to the first threshold and the length of the second side is greater than the second threshold, the second ratio is greater than or equal to the first threshold and the length of the first side is greater than the second threshold, or both the first ratio and the second ratio are less than the first threshold, determine that the block splitting method used for the picture block is any one of the first splitting method, the second splitting method, and the third splitting method.

In a possible implementation, the first determining module is specifically configured to: calculate a first ratio when the length of the first side is greater than the length of the second side, where the first ratio is a ratio of the length of the first side to the length of the second side, and if the first ratio is greater than or equal to the threshold, determine that the block splitting method is the third splitting method; or calculate a second ratio when the length of the second side is greater than the length of the first side, where the second ratio is a ratio of the length of the second side to the length of the first side, and if the second ratio is greater than or equal to the threshold, determine that the block splitting method is the second splitting method; or if both the first ratio and the second ratio are less than the threshold, determine that the block splitting method is any one of the first splitting method, the second splitting method, and the third splitting method.

In a possible implementation, the threshold includes a third threshold and a fourth threshold; and the first determining module is specifically configured to: calculate a first ratio, where the first ratio is a ratio of the length of the first side to the length of the second side; and if the length of the first side is greater than the length of the second side and the first ratio is greater than or equal to the third threshold, determine that the block splitting method is the third splitting method; or if the length of the second side is greater than the length of the first side and the first ratio is less than or equal to the fourth threshold, determine that the block splitting method is the second splitting method; or if the length of the first side is greater than the length of the second side and the first ratio is less than the third threshold, or the length of the second side is greater than the length of the first side and the first ratio is greater than the fourth threshold, determine that the block splitting method is any one of the first splitting method, the second splitting method, and the third splitting method.

According to a fourth aspect, this application provides a decoding apparatus, including:
a second obtaining module, configured to: obtain a bitstream of a to-be-processed picture; and obtain side length information of a picture block from the bitstream of the picture, where the picture block is an object on which encoding is performed, the side length information includes a length of a first side and a length of a second side of the picture block, the first side and the second side are two neighboring sides of the picture block, the first side is a horizontal line, and the second side is a vertical line;
a second determining module, configured to determine, based on the length of the first side and the length of the second side of the picture block, a block splitting method used for the picture block; and
a second splitting module, configured to split the picture block according to the block splitting method.

In a possible implementation, the second determining module is specifically configured to determine the block splitting method from a plurality of available block splitting methods based on the length of the first side, the length of the second side, and a specified threshold.

In a possible implementation, the available block splitting methods include a first splitting method, a second splitting method, and a third splitting method; and the second splitting module is specifically configured to: when the block splitting method is the first splitting method, split the picture block by using horizontal and vertical lines; or when the block splitting method is the second splitting method, split the picture block by using a horizontal line; or when the block splitting method is the third splitting method, split the picture block by using a vertical line.

In a possible implementation, the second determining module is specifically configured to: calculate a first ratio and a second ratio, where the first ratio is a ratio of the length of the first side to the length of the second side, and the second ratio is a ratio of the length of the second side to the length of the first side; and if the first ratio is greater than or equal to the threshold, determine that the block splitting method used for the picture block is the third splitting method; or if the second ratio is greater than or equal to the threshold, determine that the block splitting method used for the picture block is the second splitting method; or if both the first ratio and the second ratio are less than the threshold, determine that the block splitting method used for the picture block is any one of the first splitting method, the second splitting method, and the third splitting method.

In a possible implementation, the threshold includes a first threshold and a second threshold; and the second determining module is specifically configured to: calculate a first ratio and a second ratio, where the first ratio is a ratio of the length of the first side to the length of the second side, and the second ratio is a ratio of the length of the second side to the length of the first side; and if the first ratio is greater than or equal to the first threshold and the length of the second side is less than the second threshold, determine that the block splitting method used for the picture block is the third splitting method; or if the second ratio is greater than or equal to the first threshold and the length of the first side is less than the second threshold, determine that the block splitting method used for the picture block is the second splitting method; or if the first ratio is greater than or equal to the first threshold and the length of the second side is greater than the second threshold, the second ratio is greater than or equal to the first threshold and the length of the first side is greater than the second threshold, or both the first ratio and the second ratio are less than the first threshold, determine that the block splitting method used for the picture block is any one of the first splitting method, the second splitting method, and the third splitting method.

In a possible implementation, the second determining module is specifically configured to: calculate a first ratio when the length of the first side is greater than the length of the second side, where the first ratio is a ratio of the length of the first side to the length of the second side, and if the first ratio is greater than or equal to a threshold, determine that the block splitting method is the third splitting method; or calculate a second ratio when the length of the second side is greater than the length of the first side, where the second ratio is a ratio of the length of the second side to the length of the first side, and if the second ratio is greater than or equal to the threshold, determine that the block splitting method is the second splitting method; or if both the first ratio and the second ratio are less than the threshold, determine that the block splitting method is any one of the first splitting method, the second splitting method, and the third splitting method.

In a possible implementation, the threshold includes a third threshold and a fourth threshold; and the second determining module is specifically configured to: calculate a first ratio, where the first ratio is a ratio of the length of the first side to the length of the second side; and if the length of the first side is greater than the length of the second side and the first ratio is greater than or equal to the third threshold, determine that the block splitting method is the third splitting method; or if the length of the second side is greater than the length of the first side and the first ratio is less than or equal to the fourth threshold, determine that the block splitting method is the second splitting method; or if the length of the first side is greater than the length of the second side and the first ratio is less than the third threshold, or the length of the second side is greater than the length of the first side and the first ratio is greater than the fourth threshold, determine that the block splitting method is any one of the first splitting method, the second splitting method, and the third splitting method.

According to a fifth aspect, this application provides a picture processing device, including:
one or more processors; and
a memory, configured to store one or more programs.

When the one or more programs are executed by the one or more processors, the one or more processors are enabled to implement the picture block splitting method according to the first aspect or the second aspect.

According to a sixth aspect, this application provides a computer-readable storage medium. The computer-readable storage medium stores instructions, and when the instructions are run on a computer, the picture block splitting method according to the first aspect or the second aspect is performed.

According to a seventh aspect, this application provides a computer program. When the computer program is executed by a computer, the picture block splitting method according to the first aspect or the second aspect is performed.

### BRIEF DESCRIPTION OF DRAWINGS

FIG. 1 is a schematic effect diagram of Embodiment 1 of an available block splitting method according to this application;
FIG. 2 is a flowchart of Embodiment 1 of a picture block splitting method according to this application;
FIG. 3 is a schematic effect diagram of Embodiment 2 of an available block splitting method according to this application;
FIG. 4 is a schematic effect diagram of Embodiment 3 of an available block splitting method according to this application;
FIG. 5 is a flowchart of Embodiment 2 of a picture block splitting method according to this application;
FIG. 6 is a schematic structural diagram of an embodiment of an encoding apparatus according to this application;
FIG. 7 is a schematic structural diagram of an embodiment of a decoding apparatus according to this application; and
FIG. 8 is a schematic structural diagram of an embodiment of a picture processing device according to this application.

### DESCRIPTION OF EMBODIMENTS

To make the objectives, technical solutions, and advantages of this application clearer, the following clearly and completely describes the technical solutions in this application with reference to the accompanying drawings in this application. Apparently, the described embodiments are merely a part rather than all of the embodiments of this application. All other embodiments obtained by persons of ordinary skill in the art based on the embodiments of this application without creative efforts shall fall within the protection scope of this application.

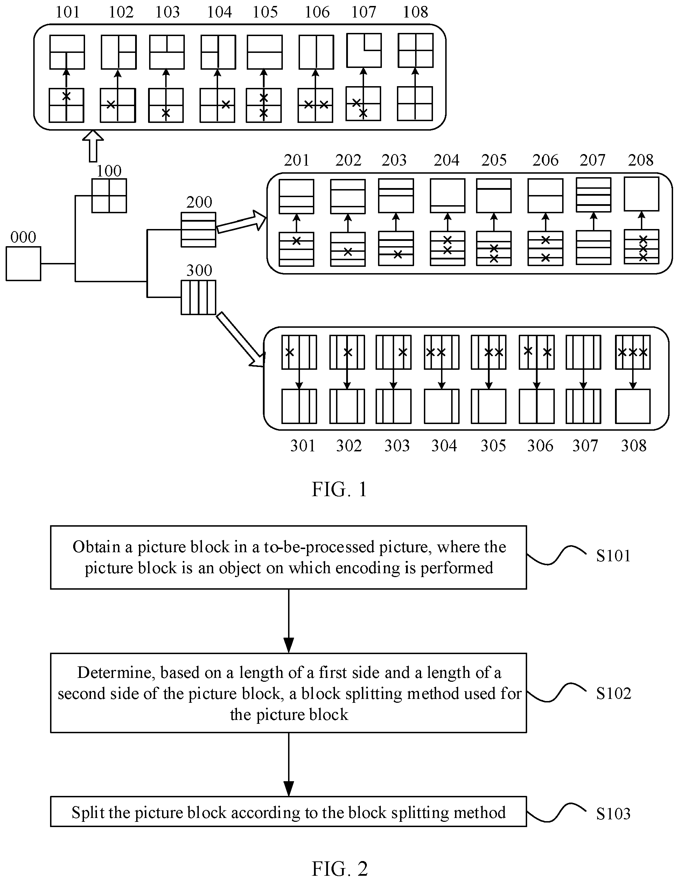

A derivative mode is a new block splitting method. A plurality of block splitting methods may be derived for one picture block, and a picture subblock is actually a picture block splitting result. FIG. 1 is a schematic effect diagram of Embodiment 1 of an available block splitting method according to this application. As shown in FIG. 1, a picture block 000 in a picture is an object on which encoding is performed, and the picture block 000 may be split by using a plurality of block splitting methods. A first splitting method is to split the picture block 000 by using horizontal and vertical lines, to obtain a splitting effect shown as a picture block 100. In this splitting method, splitting effects including but not limited to splitting effects shown as a picture block 101 to a picture block 108 may be derived based on different combinations of four horizontal and vertical lines. A second splitting method is to split the picture block 000 by using a horizontal line, to obtain a splitting effect shown as a picture block 200. In this splitting method, splitting effects including but not limited to splitting effects shown as a picture block 201 to a picture block 208 may be derived based on different combinations of three horizontal lines. A third splitting method is to split the picture block 000 by using a vertical line, to obtain a splitting effect shown as a picture block 300. In this splitting method, splitting effects including but not limited to splitting effects shown as a picture block 301 to a picture block 308 may be derived based on different combinations of three vertical lines. It should be noted that the picture block 000 shown in FIG. 1 is a square, but a shape of the picture block is not limited in this application, in other words, the picture block may be a rectangle with any length-width ratio.

As described above, a plurality of picture subblocks may be derived according to the block splitting method in the derivative mode, and picture subblocks with 24 splitting effects may be derived for the picture block 000 only in the example in FIG. 1. Consequently, encoding and decoding incur high operation overheads and are inefficient. To resolve the problems, this application provides a picture block splitting method. For each of different picture blocks in a to-be-processed picture, a block splitting method used for the picture block may be determined based on a length of a first side and a length of a second side of the picture block. The first side and the second side are two neighboring sides of the picture block. The first side is a horizontal line, and the second side is a vertical line. In this way, the determined block splitting method is most suitable for a shape of the picture block, and an unnecessary block splitting method is omitted. This reduces operation overheads, and improves picture encoding efficiency.

FIG. 2 is a flowchart of Embodiment 1 of a picture block splitting method according to this application. As shown in FIG. 2, the method in this embodiment is performed by an encoding apparatus, and may include the following steps.

Step S101: Obtain a picture block in a to-be-processed picture, where the picture block is an object on which encoding is performed.

In this application, encoding is performed based on the picture block. The picture block may be a square or a non-square, and the picture block is a largest unit on which transform is performed in this application.

Step S102: Determine, based on a length of a first side and a length of a second side of the picture block, a block splitting method used for the picture block.

The first side and the second side are two neighboring sides of the picture block. The first side is a horizontal line, and the second side is a vertical line. In this application, the block splitting method may be determined from a plurality of available block splitting methods based on the length of the first side, the length of the second side, and a specified threshold.

In this application, the block splitting method used for the picture block may be determined by using a plurality of methods. It should be noted that, in this application, before determining the block splitting method, the encoding apparatus may consider a size, a side length, or an area of the picture block to set a response condition. For example, the size of the picture block is set to be less than 64x64. A block splitting method used only for a picture block whose size is less than the size is determined by using the following methods.

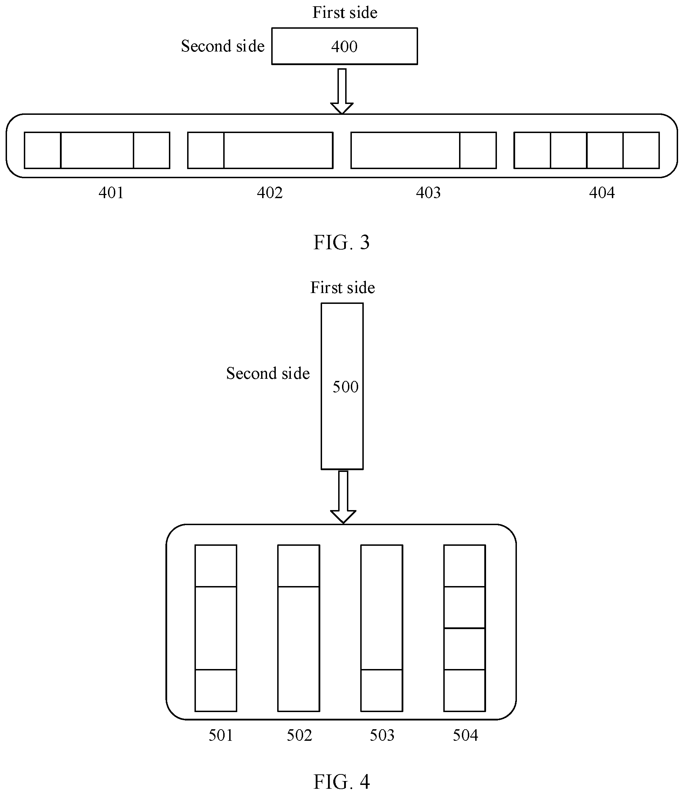

In a first method, the encoding apparatus calculates a first ratio and a second ratio, where the first ratio is a ratio of the length of the first side to the length of the second side, and the second ratio is a ratio of the length of the second side to the length of the first side; and if the first ratio is greater than or equal to the threshold, determines that the block splitting method used for the picture block is the third splitting method; or if the second ratio is greater than or equal to the threshold, determines that the block splitting method used for the picture block is the second splitting method; or if both the first ratio and the second ratio are less than the threshold, determines that the block splitting method used for the picture block is any one of the first splitting method, the second splitting method, and the third splitting method. In this method, a length-width ratio of the picture block is mainly considered. If a length difference between a long side and a wide side is relatively large, and if the picture block is split by using a line parallel to the long side, an obtained picture subblock is in a finer shape, and encoding efficiency of this derivative mode is very low. Therefore, this method can be excluded. The threshold may be an empirical value obtained based on accumulation of historical data. To be specific, the threshold is used as a boundary, and once a length-width ratio is greater than the threshold, a splitting method with low efficiency may be directly excluded, and a most effective splitting method is retained. For example, the threshold is set to 4:1. FIG. 3 is a schematic effect diagram of Embodiment 2 of an available block splitting method according to this application. As shown in FIG. 3, a ratio of a length of a first side to a length of a second side of a picture block 400 is 4:1. It can be learned that the picture block is a rectangle with a long side in a horizontal direction. In this case, the picture block 400 is split into a picture block 401 to a picture block 404 by using the third splitting method (that is, by splitting the picture block by using a vertical line). FIG. 4 is a schematic effect diagram of Embodiment 3 of an available block splitting method according to this application. As shown in FIG. 4, a ratio of a length of a second side to a length of a first side of a picture block 500 is 4:1. It can be learned that the picture block is a rectangle with a long side in a vertical direction. In this case, the picture block 500 is split into a picture block 501 to a picture block 504 by using the second splitting method (that is, by splitting the picture block by using a horizontal line). If the ratio of the length of the first side to the length of the second side of the picture block does not belong to the foregoing two cases, the picture block may be split by using any one of the three block splitting methods.

In a second method, the encoding apparatus calculates a first ratio and a second ratio, where the first ratio is a ratio of the length of the first side to the length of the second side, and the second ratio is a ratio of the length of the second side to the length of the first side; and if the first ratio is greater than or equal to a first threshold and the length of the second side is less than a second threshold, determines that the block splitting method used for the picture block is the third splitting method; or if the second ratio is greater than or equal to the first threshold and the length of the first side is less than the second threshold, determines that the block splitting method used for the picture block is the second splitting method; or if the first ratio is greater than or equal to the first threshold and the length of the second side is greater than the second threshold, the second ratio is greater than or equal to the first threshold and the length of the first side is greater than the second threshold, or both the first ratio and the second ratio are less than the first threshold, determines that the block splitting method used for the picture block is any one of the first splitting method, the second splitting method, and the third splitting method. A difference between the first determining method and the second determining method lies in that, in the second determining method, a value of the length of the first side or the length the second side of the picture block is further considered. To be specific, the third splitting method is considered only when the ratio of the length of the first side to the length of the second side is greater than or equal to the first threshold and the length of the second side is less than the second threshold; or the second splitting method is considered only when the ratio of the length of the second side to the length of the first side is greater than or equal to the first threshold and the length of the first side is less than the second threshold; or any one of the three splitting methods may be selected in another case. In this way, the block splitting method used for the picture block can be determined more cautiously.

In a third method, the encoding apparatus calculates a first ratio when the length of the first side is greater than the length of the second side, where the first ratio is a ratio of the length of the first side to the length of the second side, and if the first ratio is greater than or equal to the threshold, determines that the block splitting method is the third splitting method; or calculates a second ratio when the length of the second side is greater than the length of the first side, where the second ratio is a ratio of the length of the second side to the length of the first side, and if the second ratio is greater than or equal to the threshold, determines that the block splitting method is the second splitting method; or if both the first ratio and the second ratio are less than the threshold, determines that the block splitting method is any one of the first splitting method, the second splitting method, and the third splitting method. A difference between the first determining method and the third determining method lies in that, in the third determining method, a condition of determining the block splitting method is added when comparison between the length of the first side and the length of the second side of the picture block is further considered. In this way, the block splitting method used for the picture block can be determined more cautiously.

In a fourth method, the encoding apparatus calculates a first ratio, where the first ratio is a ratio of the length of the first side to the length of the second side; and if the length of the first side is greater than the length of the second side and the first ratio is greater than or equal to a third threshold, determines that the block splitting method is the third splitting method; or if the length of the second side is greater than the length of the first side and the first ratio is less than or equal to a fourth threshold, determines that the block splitting method is the second splitting method; or if the length of the first side is greater than the length of the second side and the first ratio is less than the third threshold, or the length of the second side is greater than the length of the first side and the first ratio is greater than the fourth threshold, determines that the block splitting method is any one of the first splitting method, the second splitting method, and the third splitting method. In the fourth method, two thresholds are set when comparison between the length of the first side and the length of the second side is considered. For a ratio of a long side to a short side, it is considered to compare the ratio with the third threshold, and the block splitting method is determined only when the ratio is greater than or equal to the third threshold. For a ratio of a short side to a long side, it is considered to compare the ratio with the fourth threshold, and the block splitting method is determined only when the ratio is less than or equal to the fourth threshold. For example, the third threshold is set to 4:1, and the fourth threshold is set to 1:4. As shown in FIG. 3, a ratio of a length of a first side to a length of a second side of a picture block 400 is 4:1 (the third threshold). It can be learned that the picture block is a rectangle with a long side in a horizontal direction. In this case, the picture block 400 is split into a picture block 401 to a picture block 404 by using the third splitting method (that is, by splitting the picture block by using a vertical line). As shown in FIG. 4, a ratio of a length of a first side to a length of a second side of a picture block 500 is 1:4. It can be learned that the picture block is a rectangle with a long side in a vertical direction. In this case, the picture block 500 is split into a picture block 501 to a picture block 504 by using the second splitting method (that is, by splitting the picture block by using a horizontal line). If the ratio of the length of the first side to the length of the second side of the picture block does not belong to the foregoing two cases, the picture block may be split by using any one of the three block splitting methods.

In addition to the foregoing methods, the encoding apparatus may further compare the length of the first side length with the first threshold, compare the length of the second side length with the second threshold, and determine, based on a comparison result, the block splitting method used for the picture block. For example, if the length of the first side is greater than 32 and the length of the second side is less than 16, the third splitting method is used.

In this application, the encoding apparatus determines, based on the length of the first side and the length of the second side of the picture block, the block splitting method used for the picture block. Correspondingly, a decoding apparatus may also use a same method for determining, and the encoding apparatus does not need to add, to a bitstream of the picture, information used to identify the block splitting method. This reduces a quantity of bits in the bitstream. The block splitting method in this application is a method for splitting a picture block based on a derivative mode in the embodiment shown in FIG. 1.

Step S103: Split the picture block according to the block splitting method.

In this application, the block splitting method that is suitable for a shape of the picture block in the to-be-processed picture is determined, so that an unnecessary block splitting method is omitted. This reduces operation overheads, and improves picture encoding efficiency.

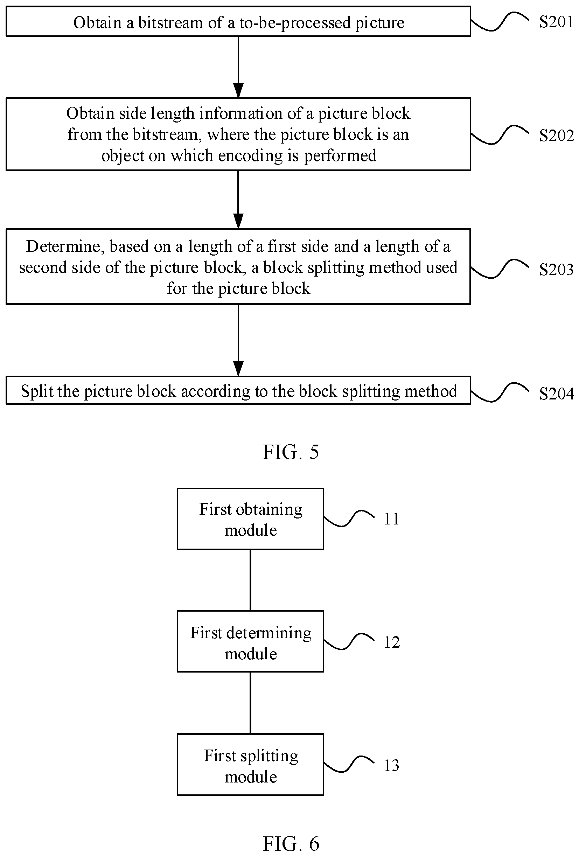

FIG. 5 is a flowchart of Embodiment 2 of a picture block splitting method according to this application. As shown in FIG. 5, the method in this embodiment is performed by a decoding apparatus, and may include the following steps.

Step S201: Obtain a bitstream of a to-be-processed picture.

In this application, the decoding apparatus and an encoding apparatus may be located on a same picture processing device, or may be located on different picture processing devices. For example, the encoding device is located on a photographing device, and the decoding device is located on a video playback device. The two devices are connected through a network or a cable. Based on this, the encoding apparatus may be synchronized with the decoding apparatus, and perform encoding in real time while transmitting the bitstream of the encoded picture to the decoding apparatus, or the encoding apparatus may transmit the bitstream of the encoded picture to the decoding apparatus when necessary (for example, when a user requests to watch a video). It can be learned that the decoding apparatus may correspondingly obtain the bitstream of the to-be-processed picture in real time or one time.

Step S202: Obtain side length information of a picture block from the bitstream, where the picture block is an object on which encoding is performed.

The side length information includes a length of a first side and a length of a second side of the picture block. The first side and the second side are two neighboring sides of the picture block. The first side is a horizontal line, and the second side is a vertical line.

Step S203: Determine, based on the length of the first side and the length of the second side of the picture block, a block splitting method used for the picture block.

To correctly decode the picture block, the block splitting method used by the decoding apparatus for the picture block needs to be consistent with the block splitting method used by the encoding apparatus. Therefore, similar to the principle of step S102 in the method embodiment shown in FIG. 2, the decoding apparatus may determine, by using a plurality of methods, the block splitting method used for the picture block. It should be noted that, in this application, before determining the block splitting method, the decoding apparatus may consider a size, a side length, or an area of the picture block to set a response condition. For example, the size of the picture block is set to be less than 64x64. A block splitting method used only for a picture block whose size is less than the size is determined by using the following methods.

In a first method, the decoding apparatus calculates a first ratio and a second ratio, where the first ratio is a ratio of the length of the first side to the length of the second side, and the second ratio is a ratio of the length of the second side to the length of the first side; and if the first ratio is greater than or equal to a threshold, determines that the block splitting method used for the picture block is a third splitting method; or if the second ratio is greater than or equal to the threshold, determines that the block splitting method used for the picture block is a second splitting method; or if both the first ratio and the second ratio are less than the threshold, determines that the block splitting method used for the picture block is any one of a first splitting method, the second splitting method, and the third splitting method. In this method, a length-width ratio of the picture block is mainly considered. If a length difference between a long side and a wide side is relatively large, and if the picture block is split by using a line parallel to the long side, an obtained picture subblock is in a finer shape, and encoding efficiency of this derivative mode is very low. Therefore, this method can be excluded. The threshold may be an empirical value obtained based on accumulation of historical data. To be specific, the threshold is used as a boundary, and once a length-width ratio is greater than the threshold, a splitting method with low efficiency may be directly excluded, and a most effective splitting method is retained. In this application, the threshold may be an explicitly specified value, or may be a value agreed on by both the encoding apparatus and the decoding apparatus. For example, the threshold is set to 4:1. FIG. 3 is a schematic effect diagram of Embodiment 2 of an available block splitting method according to this application. As shown in FIG. 3, a ratio of a length of a first side to a length of a second side of a picture block 400 is 4:1. It can be learned that the picture block is a rectangle with a long side in a horizontal direction. In this case, the picture block 400 is split into a picture block 401 to a picture block 404 by using the third splitting method (that is, by splitting the picture block by using a vertical line). FIG. 4 is a schematic effect diagram of Embodiment 3 of an available block splitting method according to this application. As shown in FIG. 4, a ratio of a length of a second side to a length of a first side of a picture block 500 is 4:1. It can be learned that the picture block is a rectangle with a long side in a vertical direction. In this case, the picture block 500 is split into a picture block 501 to a picture block 504 by using the second splitting method (that is, by splitting the picture block by using a horizontal line). If the ratio of the length of the first side to the length of the second side of the picture block does not belong to the foregoing two cases, the picture block may be split by using any one of the three block splitting methods.

In a second method, the decoding apparatus calculates a first ratio and a second ratio, where the first ratio is a ratio of the length of the first side to the length of the second side, and the second ratio is a ratio of the length of the second side to the length of the first side; and if the first ratio is greater than or equal to a first threshold and the length of the second side is less than a second threshold, determines that the block splitting method used for the picture block is a third splitting method; or if the second ratio is greater than or equal to the first threshold and the length of the first side is less than the second threshold, determines that the block splitting method used for the picture block is a second splitting method; or if the first ratio is greater than or equal to the first threshold and the length of the second side is greater than the second threshold, the second ratio is greater than or equal to the first threshold and the length of the first side is greater than the second threshold, or both the first ratio and the second ratio are less than the first threshold, determines that the block splitting method used for the picture block is any one of a first splitting method, the second splitting method, and the third splitting method. A difference between the first determining method and the second determining method lies in that, in the second determining method, a value of the length of the first side or the length the second side of the picture block is further considered. To be specific, the third splitting method is considered only when the ratio of the length of the first side to the length of the second side is greater than or equal to the first threshold and the length of the second side is less than the second threshold; or the second splitting method is considered only when the ratio of the length of the second side to the length of the first side is greater than or equal to the first threshold and the length of the first side is less than the second threshold; or any one of the three splitting methods may be selected in another case. In this way, the block splitting method used for the picture block can be determined more cautiously.

In a third method, the decoding apparatus calculates a first ratio when the length of the first side is greater than the length of the second side, where the first ratio is a ratio of the length of the first side to the length of the second side, and if the first ratio is greater than or equal to a threshold, determines that the block splitting method is a third splitting method; or calculates a second ratio when the length of the second side is greater than the length of the first side, where the second ratio is a ratio of the length of the second side to the length of the first side, and if the second ratio is greater than or equal to the threshold, determines that the block splitting method is a second splitting method; or if both the first ratio and the second ratio are less than the threshold, determines that the block splitting method is any one of a first splitting method, the second splitting method, and the third splitting method. A difference between the first determining method and the third determining method lies in that, in the third determining method, a condition of determining the block splitting method is added when comparison between the length of the first side and the length of the second side of the picture block is further considered. In this way, the block splitting method used for the picture block can be determined more cautiously.

In a fourth method, the decoding apparatus calculates a first ratio, where the first ratio is a ratio of the length of the first side to the length of the second side; and if the length of the first side is greater than the length of the second side and the first ratio is greater than or equal to a third threshold, determines that the block splitting method is a third splitting method; or if the length of the second side is greater than the length of the first side and the first ratio is less than or equal to a fourth threshold, determines that the block splitting method is a second splitting method; or if the length of the first side is greater than the length of the second side and the first ratio is less than the third threshold, or the length of the second side is greater than the length of the first side and the first ratio is greater than the fourth threshold, determines that the block splitting method is any one of a first splitting method, the second splitting method, and the third splitting method. In the fourth method, two thresholds are set when comparison between the length of the first side and the length of the second side is considered. For a ratio of a long side to a short side, it is considered to compare the ratio with the third threshold, and the block splitting method is determined only when the ratio is greater than or equal to the third threshold. For a ratio of a short side to a long side, it is considered to compare the ratio with the fourth threshold, and the block splitting method is determined only when the ratio is less than or equal to the fourth threshold. For example, the third threshold is set to 4:1, and the fourth threshold is set to 1:4. As shown in FIG. 3, a ratio of a length of a first side to a length of a second side of a picture block 400 is 4:1 (the third threshold). It can be learned that the picture block is a rectangle with a long side in a horizontal direction. In this case, the picture block 400 is split into a picture block 401 to a picture block 404 by using the third splitting method (that is, by splitting the picture block by using a vertical line). As shown in FIG. 4, a ratio of a length of a first side to a length of a second side of a picture block 500 is 1:4. It can be learned that the picture block is a rectangle with a long side in a vertical direction. In this case, the picture block 500 is split into a picture block 501 to a picture block 504 by using the second splitting method (that is, by splitting the picture block by using a horizontal line). If the ratio of the length of the first side to the length of the second side of the picture block does not belong to the foregoing two cases, the picture block may be split by using any one of the three block splitting methods.

In addition to the foregoing methods, the encoding apparatus may further compare the length of the first side length with the first threshold, compare the length of the second side length with the second threshold, and determine, based on a comparison result, the block splitting method used for the picture block. For example, if the length of the first side is greater than 32 and the length of the second side is less than 16, the third splitting method is used.

In this application, the decoding apparatus determines, based on the length of the first side and the length of the second side of the picture block, the block splitting method used for the picture block, and the decoding apparatus does not need to add, to the bitstream of the picture, information used to identify the block splitting method. This reduces a quantity of bits in the bitstream.

A same method may alternatively be used to determine the block splitting method used for the picture block from a plurality of available block splitting methods, and details are not described herein again. In this application, the decoding apparatus determines, based on the length of the first side and the length of the second side of the picture block, the block splitting method used for the picture block. This is the same as the method used by the encoding apparatus. Therefore, the encoding apparatus does not need to add, to the bitstream of the picture, information used to identify the block splitting method. This reduces a quantity of bits in the bitstream.

Step S204: Split the picture block according to the block splitting method.

In this application, the block splitting method that is suitable for a shape of the picture block in the to-be-processed picture is determined, so that an unnecessary block splitting method is omitted. This reduces operation overheads, and improves picture decoding efficiency.

FIG. 6 is a schematic structural diagram of an embodiment of an encoding apparatus according to this application. As shown in FIG. 6, the apparatus in this embodiment may include a first obtaining module 11, a first determining module 12, and a first splitting module 13. The first obtaining module 11 is configured to obtain a picture block in a to-be-processed picture, where the picture block is an object on which encoding is performed. The first determining module 12 is configured to determine, based on a length of a first side and a length of a second side of the picture block, a block splitting method used for the picture block, where the first side and the second side are two neighboring sides of the picture block, the first side is a horizontal line, and the second side is a vertical line. The first splitting module 13 is configured to split the picture block according to the block splitting method.

On the basis of the foregoing technical solution, the first determining module 12 is specifically configured to determine the block splitting method from a plurality of available block splitting methods based on the length of the first side, the length of the second side, and a specified threshold.

On the basis of the foregoing technical solution, the available block splitting methods include a first splitting method, a second splitting method, and a third splitting method; and the first splitting module 13 is specifically configured to: when the block splitting method is the first splitting method, split the picture block by using horizontal and vertical lines; or when the block splitting method is the second splitting method, split the picture block by using a horizontal line; or when the block splitting method is the third splitting method, split the picture block by using a vertical line.

On the basis of the foregoing technical solution, the first determining module 12 is specifically configured to: calculate a first ratio and a second ratio, where the first ratio is a ratio of the length of the first side to the length of the second side, and the second ratio is a ratio of the length of the second side to the length of the first side; and if the first ratio is greater than or equal to the threshold, determine that the block splitting method is the third splitting method; or if the second ratio is greater than or equal to the threshold, determine that the block splitting method is the second splitting method; or if both the first ratio and the second ratio are less than the threshold, determine that the block splitting method is any one of the first splitting method, the second splitting method, and the third splitting method.

On the basis of the foregoing technical solution, the threshold includes a first threshold and a second threshold; and the first determining module 12 is specifically configured to: calculate a first ratio and a second ratio, where the first ratio is a ratio of the length of the first side to the length of the second side, and the second ratio is a ratio of the length of the second side to the length of the first side; and if the first ratio is greater than or equal to the first threshold and the length of the second side is less than the second threshold, determine that the block splitting method is the third splitting method; or if the second ratio is greater than or equal to the first threshold and the length of the first side is less than the second threshold, determine that the block splitting method is the second splitting method; or if the first ratio is greater than or equal to the first threshold and the length of the second side is greater than the second threshold, the second ratio is greater than or equal to the first threshold and the length of the first side is greater than the second threshold, or both the first ratio and the second ratio are less than the first threshold, determine that the block splitting method is any one of the first splitting method, the second splitting method, and the third splitting method.

On the basis of the foregoing technical solution, the first determining module 12 is specifically configured to: calculate a first ratio when the length of the first side is greater than the length of the second side, where the first ratio is a ratio of the length of the first side to the length of the second side, and if the first ratio is greater than or equal to the threshold, determine that the block splitting method is the third splitting method; or calculate a second ratio when the length of the second side is greater than the length of the first side, where the second ratio is a ratio of the length of the second side to the length of the first side, and if the second ratio is greater than or equal to the threshold, determine that the block splitting method is the second splitting method; or if both the first ratio and the second ratio are less than the threshold, determine that the block splitting method is any one of the first splitting method, the second splitting method, and the third splitting method.

On the basis of the foregoing technical solution, the threshold includes a third threshold and a fourth threshold; and the first determining module 12 is specifically configured to: calculate a first ratio, where the first ratio is a ratio of the length of the first side to the length of the second side; and if the length of the first side is greater than the length of the second side and the first ratio is greater than or equal to the third threshold, determine that the block splitting method is the third splitting method; or if the length of the second side is greater than the length of the first side and the first ratio is less than or equal to the fourth threshold, determine that the block splitting method is the second splitting method; or if the length of the first side is greater than the length of the second side and the first ratio is less than the third threshold, or the length of the second side is greater than the length of the first side and the first ratio is greater than the fourth threshold, determine that the block splitting method is any one of the first splitting method, the second splitting method, and the third splitting method.

The apparatus in this embodiment may be configured to execute the technical solution of the method embodiment shown in FIG. 2. Implementation principles and technical effects thereof are similar, and details are not described herein again.

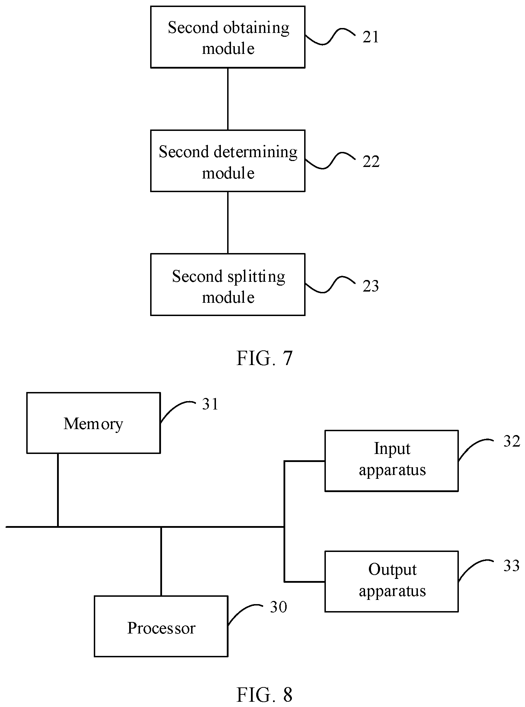

FIG. 7 is a schematic structural diagram of an embodiment of a decoding apparatus according to this application. As shown in FIG. 7, the apparatus in this embodiment may include a second obtaining module 21, a second determining module 22, and a second splitting module 23. The second obtaining module 21 is configured to: obtain a bitstream of a to-be-processed picture; and obtain side length information of a picture block from the bitstream of the picture, where the picture block is an object on which encoding is performed, the side length information includes a length of a first side and a length of a second side of the picture block, the first side and the second side are two neighboring sides of the picture block, the first side is a horizontal line, and the second side is a vertical line. The second determining module 22 is configured to determine, based on the length of the first side and the length of the second side of the picture block, a block splitting method used for the picture block. The second splitting module 23 is configured to split the picture block according to the block splitting method.

On the basis of the foregoing technical solution, the second determining module 22 is specifically configured to determine the block splitting method from a plurality of available block splitting methods based on the length of the first side, the length of the second side, and a specified threshold.

On the basis of the foregoing technical solution, the available block splitting methods include a first splitting method, a second splitting method, and a third splitting method; and the second splitting module 23 is specifically configured to: when the block splitting method is the first splitting method, split the picture block by using horizontal and vertical lines; or when the block splitting method is the second splitting method, split the picture block by using a horizontal line; or when the block splitting method is the third splitting method, split the picture block by using a vertical line.

On the basis of the foregoing technical solution, the second determining module 22 is specifically configured to: calculate a first ratio and a second ratio, where the first ratio is a ratio of the length of the first side to the length of the second side, and the second ratio is a ratio of the length of the second side to the length of the first side; and if the first ratio is greater than or equal to the threshold, determine that the block splitting method is the third splitting method; or if the second ratio is greater than or equal to the threshold, determine that the block splitting method is the second splitting method; or if both the first ratio and the second ratio are less than the threshold, determine that the block splitting method is any one of the first splitting method, the second splitting method, and the third splitting method.

On the basis of the foregoing technical solution, the threshold includes a first threshold and a second threshold; and the second determining module 22 is specifically configured to: calculate a first ratio and a second ratio, where the first ratio is a ratio of the length of the first side to the length of the second side, and the second ratio is a ratio of the length of the second side to the length of the first side; and if the first ratio is greater than or equal to the first threshold and the length of the second side is less than the second threshold, determine that the block splitting method is the third splitting method; or if the second ratio is greater than or equal to the first threshold and the length of the first side is less than the second threshold, determine that the block splitting method is the second splitting method; or if the first ratio is greater than or equal to the first threshold and the length of the second side is greater than the second threshold, the second ratio is greater than or equal to the first threshold and the length of the first side is greater than the second threshold, or both the first ratio and the second ratio are less than the first threshold, determine that the block splitting method is any one of the first splitting method, the second splitting method, and the third splitting method.

On the basis of the foregoing technical solution, the second determining module 22 is specifically configured to: calculate a first ratio when the length of the first side is greater than the length of the second side, where the first ratio is a ratio of the length of the first side to the length of the second side, and if the first ratio is greater than or equal to the threshold, determine that the block splitting method is the third splitting method; or calculate a second ratio when the length of the second side is greater than the length of the first side, where the second ratio is a ratio of the length of the second side to the length of the first side, and if the second ratio is greater than or equal to the threshold, determine that the block splitting method is the second splitting method; or if both the first ratio and the second ratio are less than the threshold, determine that the block splitting method is any one of the first splitting method, the second splitting method, and the third splitting method.

On the basis of the foregoing technical solution, the threshold includes a third threshold and a fourth threshold; and the second determining module 22 is specifically configured to: calculate a first ratio, where the first ratio is a ratio of the length of the first side to the length of the second side; and if the length of the first side is greater than the length of the second side and the first ratio is greater than or equal to the third threshold, determine that the block splitting method is the third splitting method; or if the length of the second side is greater than the length of the first side and the first ratio is less than or equal to the fourth threshold, determine that the block splitting method is the second splitting method; or if the length of the first side is greater than the length of the second side and the first ratio is less than the third threshold, or the length of the second side is greater than the length of the first side and the first ratio is greater than the fourth threshold, determine that the block splitting method is any one of the first splitting method, the second splitting method, and the third splitting method.

The apparatus in this embodiment may be configured to execute the technical solution of the method embodiment shown in FIG. 5. Implementation principles and technical effects thereof are similar, and details are not described herein again.

FIG. 8 is a schematic structural diagram of an embodiment of a picture processing device according to this application. As shown in FIG. 8, the picture processing device includes a processor 30, a memory 31, an input apparatus 32, and an output apparatus 33. There may be one or more processors 30 in the picture processing device. In FIG. 8, one processor 30 is used as an example. The processor 30, the memory 31, the input apparatus 32, and the output apparatus 33 in the picture processing device may be connected through a bus or in another manner. In FIG. 8, an example in which the processor 30, the memory 31, the input apparatus 32, and the output apparatus 33 are connected through a bus is used.

As a computer-readable storage medium, the memory 31 may be configured to store a software program, a computer-executable program, and a module, for example, program instructions/modules corresponding to the picture block splitting method in the embodiment shown in FIG. 2 or FIG. 5 in this application. By running the software program, the instructions, and the module that are stored in the memory 31, the processor 30 performs various function applications of the picture processing device and data processing, in other words, implements the foregoing picture block splitting method.

The memory 31 may mainly include a program storage area and a data storage area. The program storage area may store an operating system and an application program that is required by at least one function. The data storage area may store data created based on use of a terminal, and the like. In addition, the memory 31 may include a high-speed random access memory, or may include a nonvolatile memory, for example, at least one magnetic disk storage device, a flash memory, or another nonvolatile solid-state storage device. In some examples, the memory 31 may alternatively include memories remotely disposed for the processor 30, and the remote memories may be connected to the picture processing device through a network. Examples of the foregoing network include but are not limited to the internet, an intranet, a local area network, a mobile communications network, and a combination thereof.

The input apparatus 32 may be configured to: receive input numeral or character information, and generate a key signal input related to user setting and function control of the picture processing device. The output apparatus 33 may include a display device such as a display.

In a possible implementation, this application provides a computer-readable storage medium. The computer-readable storage medium stores instructions, and when the instructions are run on a computer, the picture block splitting method in the embodiment shown in FIG. 2 or FIG. 5 is performed.

In a possible implementation, this application provides a computer program. When the computer program is executed by a computer, the picture block splitting method in the embodiment shown in FIG. 2 or FIG. 5 is performed.

Persons of ordinary skill in the art may understand that all or some of the steps in the foregoing method embodiments may be implemented by program-instructing related hardware. The foregoing program may be stored in a computer-readable storage medium. When the program is executed, the steps in the foregoing method embodiments are performed. The foregoing storage media include any medium that can store program code, such as a ROM, a RAM, a magnetic disk, or an optical disc.

Finally, it should be noted that the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of this application.

## Claims

1. A picture block splitting method, comprising:
obtaining a picture block in a to-be-processed picture, wherein the picture block is an object on which encoding is performed;
determining, based on a length of a first side and a length of a second side of the picture block, a block splitting method used for the picture block, wherein the first side and the second side are two neighboring sides of the picture block, the first side is a horizontal line, and the second side is a vertical line; and
splitting the picture block according to the block splitting method.

2. The method according to claim 1, wherein the determining, based on a length of a first side and a length of a second side of the picture block, a block splitting method used for the picture block comprises:
determining the block splitting method from a plurality of available block splitting methods based on the length of the first side, the length of the second side, and a specified threshold.

3. The method according to claim 2, wherein the available block splitting methods comprise a first splitting method, a second splitting method, and a third splitting method; and the splitting the picture block according to the block splitting method comprises:
when the block splitting method is the first splitting method, splitting the picture block by using horizontal and vertical lines; or
when the block splitting method is the second splitting method, splitting the picture block by using a horizontal line; or
when the block splitting method is the third splitting method, splitting the picture block by using a vertical line.

4. The method according to claim 3, wherein the determining the block splitting method from a plurality of available block splitting methods based on the length of the first side, the length of the second side, and a specified threshold comprises:
calculating a first ratio and a second ratio, wherein the first ratio is a ratio of the length of the first side to the length of the second side, and the second ratio is a ratio of the length of the second side to the length of the first side; and
if the first ratio is greater than or equal to the threshold, determining that the block splitting method is the third splitting method; or
if the second ratio is greater than or equal to the threshold, determining that the block splitting method is the second splitting method; or
if both the first ratio and the second ratio are less than the threshold, determining that the block splitting method is any one of the first splitting method, the second splitting method, and the third splitting method.

5. The method according to claim 3, wherein the threshold comprises a first threshold and a second threshold; and the determining the block splitting method from a plurality of available block splitting methods based on the length of the first side, the length of the second side, and a specified threshold comprises:
calculating a first ratio and a second ratio, wherein the first ratio is a ratio of the length of the first side to the length of the second side, and the second ratio is a ratio of the length of the second side to the length of the first side; and
if the first ratio is greater than or equal to the first threshold and the length of the second side is less than the second threshold, determining that the block splitting method used for the picture block is the third splitting method; or
if the second ratio is greater than or equal to the first threshold and the length of the first side is less than the second threshold, determining that the block splitting method used for the picture block is the second splitting method; or
if the first ratio is greater than or equal to the first threshold and the length of the second side is greater than the second threshold, the second ratio is greater than or equal to the first threshold and the length of the first side is greater than the second threshold, or both the first ratio and the second ratio are less than the first threshold, determining that the block splitting method used for the picture block is any one of the first splitting method, the second splitting method, and the third splitting method.

6. The method according to claim 3, wherein the determining the block splitting method from a plurality of available block splitting methods based on the length of the first side, the length of the second side, and a specified threshold comprises:
calculating a first ratio when the length of the first side is greater than the length of the second side, wherein the first ratio is a ratio of the length of the first side to the length of the second side, and if the first ratio is greater than or equal to the threshold, determining that the block splitting method is the third splitting method; or
calculating a second ratio when the length of the second side is greater than the length of the first side, wherein the second ratio is a ratio of the length of the second side to the length of the first side, and if the second ratio is greater than or equal to the threshold, determining that the block splitting method is the second splitting method; or
if both the first ratio and the second ratio are less than the threshold, determining that the block splitting method is any one of the first splitting method, the second splitting method, and the third splitting method.

7. The method according to claim 3, wherein the threshold comprises a third threshold and a fourth threshold; and the determining the block splitting method from a plurality of available block splitting methods based on the length of the first side, the length of the second side, and a specified threshold comprises:
calculating a first ratio, wherein the first ratio is a ratio of the length of the first side to the length of the second side; and
if the length of the first side is greater than the length of the second side and the first ratio is greater than or equal to the third threshold, determining that the block splitting method is the third splitting method; or
if the length of the second side is greater than the length of the first side and the first ratio is less than or equal to the fourth threshold, determining that the block splitting method is the second splitting method; or
if the length of the first side is greater than the length of the second side and the first ratio is less than the third threshold, or the length of the second side is greater than the length of the first side and the first ratio is greater than the fourth threshold, determining that the block splitting method is any one of the first splitting method, the second splitting method, and the third splitting method.

8. A picture block splitting method, comprising:
obtaining a bitstream of a to-be-processed picture;
obtaining side length information of a picture block from the bitstream, wherein the picture block is an object on which encoding is performed, the side length information comprises a length of a first side and a length of a second side of the picture block, the first side and the second side are two neighboring sides of the picture block, the first side is a horizontal line, and the second side is a vertical line;
determining, based on the length of the first side and the length of the second side of the picture block, a block splitting method used for the picture block; and
splitting the picture block according to the block splitting method.

9. The method according to claim 8, wherein the determining, based on the length of the first side and the length of the second side of the picture block, a block splitting method used for the picture block comprises:
determining the block splitting method from a plurality of available block splitting methods based on the length of the first side, the length of the second side, and a specified threshold.

10. The method according to claim 9, wherein the available block splitting methods comprise a first splitting method, a second splitting method, and a third splitting method; and the splitting the picture block according to the block splitting method comprises:
when the block splitting method is the first splitting method, splitting the picture block by using horizontal and vertical lines; or
when the block splitting method is the second splitting method, splitting the picture block by using a horizontal line; or
when the block splitting method is the third splitting method, splitting the picture block by using a vertical line.

11. The method according to claim 10, wherein the determining the block splitting method from a plurality of available block splitting methods based on the length of the first side, the length of the second side, and a specified threshold comprises:
calculating a first ratio and a second ratio, wherein the first ratio is a ratio of the length of the first side to the length of the second side, and the second ratio is a ratio of the length of the second side to the length of the first side; and
if the first ratio is greater than or equal to the threshold, determining that the block splitting method is the third splitting method; or
if the second ratio is greater than or equal to the threshold, determining that the block splitting method is the second splitting method; or
if both the first ratio and the second ratio are less than the threshold, determining that the block splitting method is any one of the first splitting method, the second splitting method, and the third splitting method.

12. The method according to claim 10, wherein the threshold comprises a first threshold and a second threshold; and the determining the block splitting method from a plurality of available block splitting methods based on the length of the first side, the length of the second side, and a specified threshold comprises:
calculating a first ratio and a second ratio, wherein the first ratio is a ratio of the length of the first side to the length of the second side, and the second ratio is a ratio of the length of the second side to the length of the first side; and
if the first ratio is greater than or equal to the first threshold and the length of the second side is less than the second threshold, determining that the block splitting method is the third splitting method; or
if the second ratio is greater than or equal to the first threshold and the length of the first side is less than the second threshold, determining that the block splitting method is the second splitting method; or
if the first ratio is greater than or equal to the first threshold and the length of the second side is greater than the second threshold, the second ratio is greater than or equal to the first threshold and the length of the first side is greater than the second threshold, or both the first ratio and the second ratio are less than the first threshold, determining that the block splitting method is any one of the first splitting method, the second splitting method, and the third splitting method.

13. The method according to claim 10, wherein the determining the block splitting method from a plurality of available block splitting methods based on the length of the first side, the length of the second side, and a specified threshold comprises:
calculating a first ratio when the length of the first side is greater than the length of the second side, wherein the first ratio is a ratio of the length of the first side to the length of the second side, and if the first ratio is greater than or equal to the threshold, determining that the block splitting method is the third splitting method; or
calculating a second ratio when the length of the second side is greater than the length of the first side, wherein the second ratio is a ratio of the length of the second side to the length of the first side, and if the second ratio is greater than or equal to the threshold, determining that the block splitting method is the second splitting method; or
if both the first ratio and the second ratio are less than the threshold, determining that the block splitting method is any one of the first splitting method, the second splitting method, and the third splitting method.

14. The method according to claim 10, wherein the threshold comprises a third threshold and a fourth threshold; and the determining the block splitting method from a plurality of available block splitting methods based on the length of the first side, the length of the second side, and a specified threshold comprises:
calculating a first ratio, wherein the first ratio is a ratio of the length of the first side to the length of the second side; and
if the length of the first side is greater than the length of the second side and the first ratio is greater than or equal to the third threshold, determining that the block splitting method is the third splitting method; or
if the length of the second side is greater than the length of the first side and the first ratio is less than or equal to the fourth threshold, determining that the block splitting method is the second splitting method; or
if the length of the first side is greater than the length of the second side and the first ratio is less than the third threshold, or the length of the second side is greater than the length of the first side and the first ratio is greater than the fourth threshold, determining that the block splitting method is any one of the first splitting method, the second splitting method, and the third splitting method.

15. An encoding apparatus, comprising:
a first obtaining module, configured to obtain a picture block in a to-be-processed picture, wherein the picture block is an object on which encoding is performed;
a first determining module, configured to determine, based on a length of a first side and a length of a second side of the picture block, a block splitting method used for the picture block, wherein the first side and the second side are two neighboring sides of the picture block, the first side is a horizontal line, and the second side is a vertical line; and
a first splitting module, configured to split the picture block according to the block splitting method.

16. The apparatus according to claim 15, wherein the first determining module is specifically configured to determine the block splitting method from a plurality of available block splitting methods based on the length of the first side, the length of the second side, and a specified threshold.

17. The apparatus according to claim 16, wherein the available block splitting methods comprise a first splitting method, a second splitting method, and a third splitting method; and the first splitting module is specifically configured to: when the block splitting method is the first splitting method, split the picture block by using horizontal and vertical lines; or when the block splitting method is the second splitting method, split the picture block by using a horizontal line; or when the block splitting method is the third splitting method, split the picture block by using a vertical line.

18. The apparatus according to claim 17, wherein the first determining module is specifically configured to:
calculate a first ratio and a second ratio, wherein the first ratio is a ratio of the length of the first side to the length of the second side, and the second ratio is a ratio of the length of the second side to the length of the first side; and if the first ratio is greater than or equal to the threshold, determine that the block splitting method is the third splitting method;
or if the second ratio is greater than or equal to the threshold, determine that the block splitting method is the second splitting method; or if both the first ratio and the second ratio are less than the threshold, determine that the block splitting method is any one of the first splitting method, the second splitting method, and the third splitting method.

19. The apparatus according to claim 17, wherein the threshold comprises a first threshold and a second threshold; and the first determining module is specifically configured to: calculate a first ratio and a second ratio, wherein the first ratio is a ratio of the length of the first side to the length of the second side, and the second ratio is a ratio of the length of the second side to the length of the first side; and if the first ratio is greater than or equal to the first threshold and the length of the second side is less than the second threshold, determine that the block splitting method is the third splitting method; or if the second ratio is greater than or equal to the first threshold and the length of the first side is less than the second threshold, determine that the block splitting method is the second splitting method; or if the first ratio is greater than or equal to the first threshold and the length of the second side is greater than the second threshold, the second ratio is greater than or equal to the first threshold and the length of the first side is greater than the second threshold, or both the first ratio and the second ratio are less than the first threshold, determine that the block splitting method is any one of the first splitting method, the second splitting method, and the third splitting method.

20. The apparatus according to claim 17, wherein the first determining module is specifically configured to:
calculate a first ratio when the length of the first side is greater than the length of the second side, wherein the first ratio is a ratio of the length of the first side to the length of the second side, and if the first ratio is greater than or equal to the threshold, determine that the block splitting method is the third splitting method; or calculate a second ratio when the length of the second side is greater than the length of the first side, wherein the second ratio is a ratio of the length of the second side to the length of the first side, and if the second ratio is greater than or equal to the threshold,
determine that the block splitting method is the second splitting method; or if both the first ratio and the second ratio are less than the threshold, determine that the block splitting method is any one of the first splitting method, the second splitting method, and the third splitting method.

21. The apparatus according to claim 17, wherein the threshold comprises a third threshold and a fourth threshold; and the first determining module is specifically configured to: calculate a first ratio, wherein the first ratio is a ratio of the length of the first side to the length of the second side; and if the length of the first side is greater than the length of the second side and the first ratio is greater than or equal to the third threshold, determine that the block splitting method is the third splitting method; or if the length of the second side is greater than the length of the first side and the first ratio is less than or equal to the fourth threshold, determine that the block splitting method is the second splitting method; or if the length of the first side is greater than the length of the second side and the first ratio is less than the third threshold, or the length of the second side is greater than the length of the first side and the first ratio is greater than the fourth threshold, determine that the block splitting method is any one of the first splitting method, the second splitting method, and the third splitting method.

22. A decoding apparatus, comprising:
a second obtaining module, configured to: obtain a bitstream of a to-be-processed picture; and obtain side length information of a picture block from the bitstream, wherein the picture block is an object on which encoding is performed, the side length information comprises a length of a first side and a length of a second side of the picture block, the first side and the second side are two neighboring sides of the picture block, the first side is a horizontal line, and the second side is a vertical line;
a second determining module, configured to determine, based on the length of the first side and the length of the second side of the picture block, a block splitting method used for the picture block; and
a second splitting module, configured to split the picture block according to the block splitting method.

23. The apparatus according to claim 22, wherein the second determining module is specifically configured to determine the block splitting method from a plurality of available block splitting methods based on the length of the first side, the length of the second side, and a specified threshold.

24. The apparatus according to claim 23, wherein the available block splitting methods comprise a first splitting method, a second splitting method, and a third splitting method; and the second splitting module is specifically configured to: when the block splitting method is the first splitting method, split the picture block by using horizontal and vertical lines; or when the block splitting method is the second splitting method, split the picture block by using a horizontal line; or when the block splitting method is the third splitting method, split the picture block by using a vertical line.

25. The apparatus according to claim 24, wherein the second determining module is specifically configured to:
calculate a first ratio and a second ratio, wherein the first ratio is a ratio of the length of the first side to the length of the second side, and the second ratio is a ratio of the length of the second side to the length of the first side; and if the first ratio is greater than or equal to the threshold, determine that the block splitting method is the third splitting method; or if the second ratio is greater than or equal to the threshold, determine that the block splitting method is the second splitting method; or if both the first ratio and the second ratio are less than the threshold, determine that the block splitting method is any one of the first splitting method, the second splitting method, and the third splitting method.

26. The apparatus according to claim 24, wherein the threshold comprises a first threshold and a second threshold; and the second determining module is specifically configured to: calculate a first ratio and a second ratio, wherein the first ratio is a ratio of the length of the first side to the length of the second side, and the second ratio is a ratio of the length of the second side to the length of the first side; and if the first ratio is greater than or equal to the first threshold and the length of the second side is less than the second threshold, determine that the block splitting method is the third splitting method; or if the second ratio is greater than or equal to the first threshold and the length of the first side is less than the second threshold, determine that the block splitting method is the second splitting method; or if the first ratio is greater than or equal to the first threshold and the length of the second side is greater than the second threshold, the second ratio is greater than or equal to the first threshold and the length of the first side is greater than the second threshold, or both the first ratio and the second ratio are less than the first threshold, determine that the block splitting method is any one of the first splitting method, the second splitting method, and the third splitting method.

27. The apparatus according to claim 24, wherein the second determining module is specifically configured to:
calculate a first ratio when the length of the first side is greater than the length of the second side, wherein the first ratio is a ratio of the length of the first side to the length of the second side, and if the first ratio is greater than or equal to the threshold, determine that the block splitting method is the third splitting method; or calculate a second ratio when the length of the second side is greater than the length of the first side, wherein the second ratio is a ratio of the length of the second side to the length of the first side, and if the second ratio is greater than or equal to the threshold,
determine that the block splitting method is the second splitting method; or if both the first ratio and the second ratio are less than the threshold, determine that the block splitting method is any one of the first splitting method, the second splitting method, and the third splitting method.

28. The apparatus according to claim 24, wherein the threshold comprises a third threshold and a fourth threshold; and the second determining module is specifically configured to: calculate a first ratio, wherein the first ratio is a ratio of the length of the first side to the length of the second side; and if the length of the first side is greater than the length of the second side and the first ratio is greater than or equal to the third threshold, determine that the block splitting method is the third splitting method; or if the length of the second side is greater than the length of the first side and the first ratio is less than or equal to the fourth threshold, determine that the block splitting method is the second splitting method; or if the length of the first side is greater than the length of the second side and the first ratio is less than the third threshold, or the length of the second side is greater than the length of the first side and the first ratio is greater than the fourth threshold, determine that the block splitting method is any one of the first splitting method, the second splitting method, and the third splitting method.

29. A picture processing device, comprising:
one or more processors; and
a memory, configured to store one or more programs, wherein
when the one or more programs are executed by the one or more processors, the one or more processors are enabled to implement the picture block splitting method according to any one of claims 1 to 14.

30. A computer-readable storage medium, wherein the computer-readable storage medium stores instructions, and when the instructions are run on a computer, the picture block splitting method according to any one of claims 1 to 14 is performed.

31. A computer program, wherein when the computer program is executed by a computer, the picture block splitting method according to any one of claims 1 to 14 is performed.
